(19) Europäisches Patentamt
European Patent Office
Office européen des brevets

(11) **EP 1 921 890 A2**

(12) **EUROPEAN PATENT APPLICATION**

(43) Date of publication:
**14.05.2008 Bulletin 2008/20**

(51) Int Cl.:
*H04R 1/40* (2006.01)          *H04R 3/12* (2006.01)
*H04R 5/02* (2006.01)          *H04N 5/64* (2006.01)

(21) Application number: **08003242.8**

(22) Date of filing: **24.02.2004**

(84) Designated Contracting States:
**AT BE BG CH CY CZ DE DK EE ES FI FR GB GR HU IE IT LI LU MC NL PT RO SE SI SK TR**

(30) Priority: **24.02.2003 GB 0304126**

(62) Document number(s) of the earlier application(s) in accordance with Art. 76 EPC:
**04713938.1 / 1 600 035**

(71) Applicant: **1...Limited**
**Cambridge, CB4 0WS (GB)**

(72) Inventors:
• **Hooley, Anthony**
**Cambridge CB4 1HP (GB)**
• **Lenel, Ursula Ruth**
**Cambridge CB4 3EL (GB)**
• **Goudie, Angus Gavin**
**Cambridge CB4 3QQ (GB)**
• **Shepherd, Mark Richard**
**Herts SG8 6BL (GB)**
• **Bienek, Irving Alexander**
**Cambridge CB4 9YX (GB)**

(74) Representative: **Roberts, Mark Peter**
**J.A. Kemp & Co.**
**14 South Square**
**Gray's Inn**
**London WC1R 5JJ (GB)**

Remarks:
This application was filed on 22-02-2008 as a divisional application to the application mentioned under INID code 62.

(54) **Sound beam loudspeaker system**

(57)     A method of generating two beams of sound for two respective listeners using an array of electro-acoustic transducers, the method comprising beaming a first audio programme to a first listening position and beaming a second audio programme to a second listening position. A video programme, preferably on a television split-screen, is also displayed corresponding to the two audio programmes.

Fig.8.

**Description**

FIELD OF THE INVENTION

This invention relates to a device including an array of electro-acoustic transducers capable of generating beams of audible sound. More specifically, it relates to such array devices capable of receiving multiple audio or multi-channel audio input signals and to produce independently steerable and focusable beams of audible sound, at a level suitable for home entertainment or professional sound reproduction applications.

BACKGROUND OF THE INVENTION

Recent years have seen widespread use of multi-channel stereophonic sound in audio/visual systems. The trend in the technology has been away from conventional stereo sound reproduction systems, and toward "surround sound" techniques where the sound field is dynamically (and intentionally) shifted to the sides of and behind the listener.

To improve listener perceived characteristics, multi-channel sound reproduction systems are known which include one or more surround-sound channels (often referred to in the past as "ambience" or "special-effects" channels) in addition to left and right (and optimally, centre) sound channels. These systems are now relatively common in motion picture theatres and are becoming more and more common in the homes of consumers. A driving force behind the proliferation of such systems in consumers' homes is the widespread availability of surround-sound home video software, mainly surround-sound motion pictures (movies) made for theatrical release and subsequently transferred to home video media (e.g., digital video discs (DVDs), videocassettes, videodisks, and broadcast or cable television).

In the case where sound is reproduced in such a way as to provide a sound field expanding behind a listener or to localize a sound image behind a listener, two (front) loudspeakers are arranged to the left and right front of a listener for left and right channel reproduction and at least one or two rear loudspeakers are additionally arranged behind the listener for surround or rear channel reproduction. In addition, modem surround sound systems may include a centre speaker arranged in front of the listener between the front left and the front right speaker. To improve sound quality, a low-frequency part of the audio signal may be directed to an additional subwoofer. The exact position of the subwoofer with respect to a listener is not critical to the overall performance of the surround-sound system.

In ordinary homes, however, it is difficult to arrange five to six loudspeakers in a room. As new surround sound systems are often incompatible with any existing stereo systems, a user is left with the choice of having two co-existing systems in one room (bringing the number of speakers up to seven or eight) or to discard the old system. This being clearly unsatisfactory, attempts have been made in recent years to reduce the number of speakers to generate surround sound or to at least provide for a better integration between new surround sound systems and any legacy stereo equipment.

The most advanced system aiming at reducing the number of hardware components is described in the commonly-owned published International Patent application No. WO 01/23104, WO 02/078388 and WO 03/034780. In WO 01/23104, an array of transducers generates a number of independently steerable sound beams. In operation the sound beams are directed at suitable locations of reflecting surfaces or walls left and right of a listener and towards the left and right corners of the wall behind the listener. The reflected sounds converge towards the listening position, the so-called "sweet spot", in very much the same manner as if projected from loudspeakers located at those positions. Hence, the system disposes of the need to have speakers in more than one location of the room.

While being satisfactory for many applications, there is perceived the need to reduce the number of transducers of the array and the requirements regarding their acoustic properties while preserving an adequate quality of the sound reproduction. Also it is desirable to reduce the overall dimensions of such as system in order to facilitate installation in smaller rooms.

It is therefore an object of the invention to improve the apparatus of WO O1/23104 so as to produce a system capable of generating surround sound from a single enclosure with reduced size and number of transducers.

SUMMARY OF THE INVENTION

The invention is described in the appended claims.

According to a first aspect of the invention, there is provided an audio system for producing a plurality of surround-sound channels in response to an audio input signal, comprising an amplifier system adapted to receive surround sound input signals and electro-acoustic transducers arranged as a phased array and adapted to emit surround sound based on said surround sound input signals, said array comprising a plurality of high frequency transducers and one, two or more low frequency transducers arranged at the perimeter of said array.

An array is understood to be a spatial arrangement of transducers with predetermined spacing or distances between the transducers, the transducers usually all facing away from the plane of the array. The array of this invention is phased by delaying drive signals for single or groups of transducers as described for example in the above referenced patent applications WO 01/23104 and WO 02/078388. The transducers of the array are best arranged in a planar array with all transducers located on the front plate of a single housing or mounting frame.

The low frequency transducers are characterized by having an improved low frequency reproduction capability compared to the high frequency capability of the other array transducers making up the majority of the array. Better low frequency reproduction can generally be defined as having a higher acoustic output power level (SPL) in the lower frequency range or by having a lower cut-off frequency. Also, as a general rule, the lower frequency transducers or "woofers" move in operation a larger volume of air compared to the other transducers in the array and thus have either a larger diaphragm diameter or a larger transducer travel or both.

The number of low frequency transducers is smaller than the number of high frequency transducers that make up the majority of the array, preferably by a factor of 5 or even 10 or even 50. The absolute number of the high frequency or array transducers is preferably below 200 and more preferably below 150 or even below 120. Particularly in cases where vertical steering is not required or desired, the number of array transducers can be below 50, 30 or even 20. A minimum limit to produce steerable sound beams is preferably more than 5, more preferably more than 8 and even more preferably more than 12. The number of low frequency transducers is preferably less than 20, more preferably less than 10 and even more preferably less than 7.

In a preferred variant the high frequency transducers are closely spaced whilst the closest distance between two low frequency transducers is larger. The preferred average distance between the centre points of neighbouring high-frequency transducers is 50 mm or less, whereas the distance between the centre points of neighbouring low frequency transducers is preferably more than 100 mm or even more than 400 mm.

Whereas it is preferred to use only two groups of transducers, it is possible to envisage variants of the inventions using a third or more groups of transducer for reproducing midrange frequencies. Also the array may be used with a conventional sub-woofer that itself is not part of the array. For such variants the above description of features is applied to those transducers that make up the majority of the array and those transducers of the array that are best adapted to reproduce low frequency content.

To make optimal use of the low frequency transducers the invention preferably includes a low pass filter system (LPF) that filters the input signals so as to provide one or more drive signals for the low frequency transducers. The LPF is preferably implemented as a frequency crossover system that reduces low frequency content from the signal to be emitted from the high frequency transducers and directs the low frequency content for reproduction primarily by the low frequency transducers.

Hence the majority of transducers of the array are not used to reproduce the major portion of the power of the low frequency content and their specification can be altered to being optimised for high frequency reproduction. The crossover frequency can be chosen within a broad range of frequencies.

It has been found that it is possible to reduce the number of transducers required to generate steerable beams of audible sound by arranging the array transducers in an array of approximately elliptical shape and adding transducers with better low frequency reproduction compared to those transducers that make up the majority of the array, with such low frequency transducers being placed around the perimeter of said array.

An approximately elliptical shape includes discrete oval shapes where the number of transducers per both columns and rows increases towards the middle of the array and approximations of an elliptical shape through polygons such as hexagons or octagons.

The preferred aspect ratio of the oval or pseudo-oval array is around 7:4; another preferred aspect ratio is around 16:9. In both cases, the preferred orientation for the longer axis is horizontal.

However at a low number of transducers the elliptical shape degenerates into arrays which are essentially line arrays of one, two or three horizontal lines of array transducers. The lines can be staggered to form a triangular grid in order to further reduce the distance between the transducers.

In further variants the elliptical shape includes arrays which are essentially line arrays of one, two or three horizontal lines and further including a central zone, region or interval where the height of the array exceeds the nominal height as measured along the sides or wings of the array. In other words the array can have a central 2-dimensional cluster wider than the rest of the array.

Though the low frequency transducers can be arranged in various ways, for example, as columns below or above or to the left and the right of the array, they are preferably placed within the corners of a rectangle circumscribing the oval array. The arrangement of low frequency transducers in the corners of the rectangular envelope of the elliptical or oval array has the advantage of making optimal use of the available area on a single front panel.

In another preferred variant of the invention the low frequency transducers may be used to reproduce the center channel of a surround sound input. The reproduction of the center channel through the low frequency transducers may be exclusive. In this and other cases, the low frequency transducers are also preferably wide-band transducers, covering most or all of the audio spectrum.

If two, three or four or more low frequency transducers are used, they can be regarded as constituting a sub-array, and where the low frequency transducers are near the edges or corners of the system they have significant relative physical extent and so are able to form beams at low frequencies.

In the variant where the low frequency transducers are located at the four corners of the array, i.e. one or more at each corner location, and where all or most of the low frequency energy is radiated from these woofers, it will be seen that unlike radiation from the main transducer array which has a uniform distribution across the entire aperture of the array (neglecting for the moment any window function that may be applied), this low frequency sub-array has all or most of the energy concentrated at the edges. The effect of this is to make the radiated beam significantly narrower from the well-separated comer-located transducer sub-array than from a uniformly illuminated aperture of the same physical extent. Thus, this construction with corner transducers enhances the available low-frequency beam tightness achievable, over and above a uniform array construction, as well as having very significant cost benefits. Similar benefits are achieved in a line array with a low frequency transducer at each end of the line.

Once this advantage is recognized, it also becomes clear that by suitably relative-time delaying the low frequency signals to the various low frequency transducers, one can steer and/or focus a low frequency beam in just the same way (but not perhaps to the same degree of tightness) as the main high frequency transducer array steers and/or focuses the rest of the frequencies.

This steering, focusing and beam tightening of the sub-array can be done in conjunction with both the reproduction of the center channel described above, as well as with the steering of beams of the main transducer array. By using a suitably shaped low pass (LP) filter function in the signal path to each low frequency channel the ratio of signal level at any given frequency fed to the low frequency transducers, to the level fed to the high frequency transducers in the array can be varied so as to maximize a beam- tightening effect of driving the low frequency transducers in conjunction with the main array, and minimizing the level of grating sidelobes caused by the low frequency - high frequency transducer spacing (which is necessarily greater than the high frequency transducer neighbor-to-neighbor spacing because of the greater diameter of the low frequency transducers).

In a particularly advantageous variant of the invention, the border of the array, including low frequency transducers to at least the outer perimeter of their active diaphragm area, is determined by the low-frequency cross-over. In this variant array size (length, width or diameter) is equal or smaller than half the wavelength at the cross-over frequency.

Alternatively, particularly in cases were the cross-over is spread over a broader frequency range, a cross-over frequency can be technically defined by the first resonance $F_0$ of the high-frequency transducers in the audio band. The distance between the woofers is set to 0.5 c/ $F_0$ (c being the sound velocity) or smaller. For most practical purposes $F_0$ can be replaced for this calculation by $F_c$ (the cut-off frequency) of the high frequency transducers.

Sidelobes can be further reduced by filling the space or area between the thus placed low frequency transducers evenly with the high frequency transducers.

In another embodiment of the invention, potential sidelobes are reduced by amplifying (or using the equalization stage) in order to maintain an approximately equal or "flat" response of the high frequency transducers over a range of frequencies below $F_0$ or Fc and, at the same time, compensate for the phase shift between the woofer output signals and the output signals of the high frequency transducers. Preferably, this variant includes a phase-shifting filter in the signal path to the woofers to ensure that the woofer emissions are subject to the same phase shifts as the high-frequency transducers.

In another embodiment of the invention, the constraint that the maximum woofer separation should be $\leq 0.5c/F_0$ may be relaxed as described below, without causing strong grating sidelobes. If a small section of the transducers comprising the main array, positioned at and around the centre of the array, are replaced with broader-band transducers with a lower resonant frequency, say $F_0'$, so that this central section of the main array is able to contribute significant acoustic power output at frequencies below $F_0$, and down to at least $F_0'$ or lower (say $F_L$) and a compensatory equalisation filter is used, then the woofers may be separated by a distance as great as $c/F_0' >> 0.5c/F_0$. Clearly the crossover frequency for this subset of the main array should be reduced below $F_0$, down to $F_0'$ or even to $F_L$. This approach to reducing grating sidelobes may be extended by inserting more than one patch of substitute wide-band array transducers, these patches preferably being approximately evenly spaced across the width and height of the main array, depending on how many patches are used. The woofer separations may then be increased further still.

It is furthermore advantageous to position the array transducers non-uniformly across the array, preferably using a wider spacing towards the perimeter of the array. This has the effect of reducing unwanted sidelobes.

The beam quality of a sound beam generated by the array is further improved by using a window function that smoothes the array edges. Suitable window functions which taper away from the central region are for example cosine windows, Hanning windows or other similar window functions.

A window function is preferably implemented by weighing the output amplitudes of a transducer with a factor that depends on the position of the transducer within the array.

Thus the invention can be used for a compact surround-sound system capable of generating at a listener position a true surround-sound environment from a housing of the size of a conventional television set, making use of an array of high-frequency and thus relatively inexpensive transducers and a limited number of low-frequency and hence relatively expensive transducers, all positioned on the front face of the system. A television monitor could be mounted above or below the system to form a unit capable of simultaneously reproducing video and audio data, or could be combined directly with the transducer array to further reduce cost by sharing Power Supply Units and casework, and reducing external wiring and connections.

Alternatively the beamsteering capability can be used in "dual mono" mode to project the audio channels of two or more different sources into two different directions. This alternative embodiment can be useful in combination with split-screen or multiple window TV sets in that the audio signal associated with each window can be projected into a different direction towards, for example, different audiences.

The high frequency transducers are selected for performance and (low) cost. Preferably the effective radiating diameter of the transducers is in the range 10-50 mm, more preferably in the range 20-40mm. Such a transducer array is suitable for a sound system in domestic or other indoor (e.g. office) settings. Where a Sound Projector is designed for use in larger venues, for example a theatre or as a Public Address system, larger array transducers may be used, for example 50mm or more diameter or even 100 mm or more diameter.

The array of the present invention is preferably planar (that is to say all of the transducers are located in the same plane) or quasi-planar (that is to say the transducers are substantially located in the same plane or are arranged in a configuration which may for practical purposes be considered planar). Each of the transducers preferably has a normal axis perpendicular to the plane of the array and parallel to the normal axis of each of the other transducers in the array.

The invention also comprises a loudspeaker system including an array of electro-acoustic transducers capable of simultaneously generating at least two beams of sound with at least one of said beams being steerable, a first set of said transducers being high frequency transducers substantially incapable of emitting low frequency sound, a second set of said transducers being low frequency or wideband transducers capable of emitting low frequency sound, said system including a filter system to filter low frequency content from signals destined to be emitted by the high frequency transducers and to add said low frequency content to signals destined to be emitted by the low frequency transducers.

This arrangement allows less expensive high frequency transducers to form the bulk of the array and to output all the low frequency signals using a smaller set of low frequency or wideband transducers. These transducers are preferably at the perimeter of the array to enable maximum directivity of the low frequency beams.

In a particularly low cost variant, the array is preferably a line array having one, two or three horizontal lines. This allows beams to be directed in a horizontal plane with little directivity possible in a vertical direction.

The invention also comprises a loudspeaker system comprising a plurality of transducers arranged in a line array formation, wherein the average spacing between the transducers increases towards the ends of the array.

The non-uniform spacing of transducers allows a useful reduction in side lobe power, which is particularly useful for dual-mono applications.

The invention also comprises a method of generating beams of sound using an array of electro-acoustic transducers, said method comprising: filtering signals destined for high frequency transducers to remove low frequency content; and adding said low frequency content to signals destined for low frequency transducers.

Furthermore, the invention comprises a method of generating two beams of sound for two respective listeners using a horizontally aligned line array, said method comprising: directing a first audio programme to a first listening position; and directing a second audio programme to a second, different listening position.

These and other aspects of inventions will be apparent from the following detailed description of non-limitative examples making reference to the following schematic drawings.

BRIEF DESCRIPTION OF THE DRAWINGS

FIG. 1 shows a front face of a known transducer array system;

FIGS. 2A to 2J show front faces of transducer array systems in accordance with variants of the present invention;

FIG. 3A is a block diagram of the main functional elements of the transducer array system;

FIG. 3B is a block diagram of the driver section elements of the transducer array system;

FIG. 4 illustrates the crossover system of a transducer array system;

FIG. 5 shows a simulated comparison of beam quality between the known sound beam loudspeaker system of FIG. 1 and the novel sound beam system of FIG. 2A;

FIGS. 6A to 6G    are graphs showing the effects achievable using window functions and non-uniform transducer spacing,

FIG. 7    illustrates the use of a system in accordance with the present invention; and

FIG. 8    is an overhead view of a sound projector providing different audio signals to different users.

DETAILED DESCRIPTION

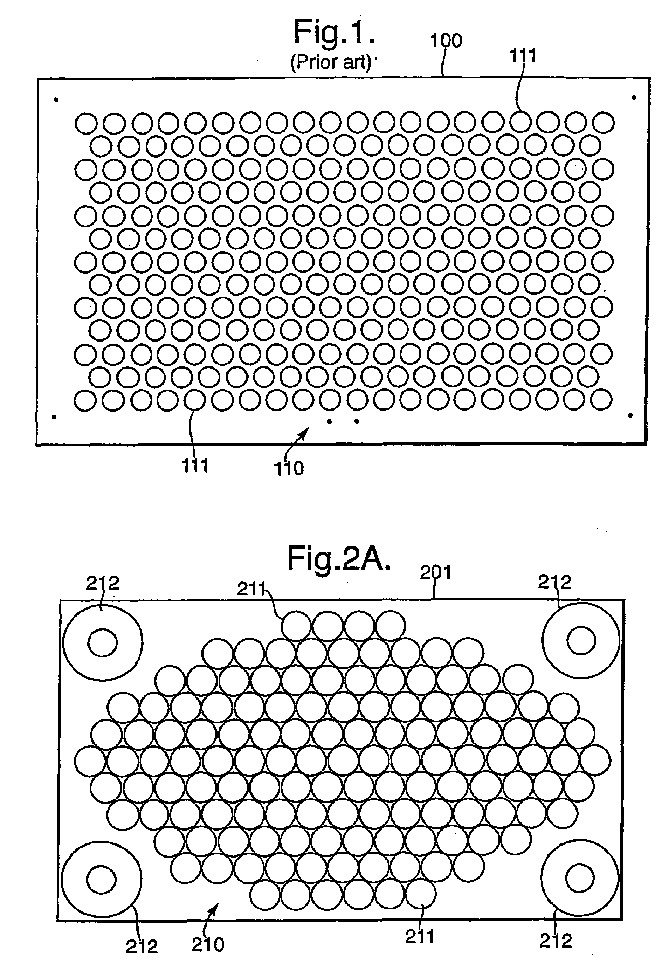

Referring to FIG. 1, there is shown the front face 100 of a known transducer array loudspeaker system. In the following this system and the new systems according to variants of the present invention will be generally referred to as "Sound Projectors".
The known Sound Projector system of FIG 1 includes an array 110 of 254 transducers 111 each having a diameter of 35 mm. The transducers are arranged on a triangular pitch grid with a rectangular envelope or circumference. The array 110 itself is mounted on a rectangular base plate 101. The overall dimensions of the base plate are 900 mm length and 552 mm height. The transducers 111 are nominally equal having a good sound reproduction across most of the audible spectrum. Given their small diaphragm size the travel of the moving coil system needs to be large to achieve sufficient power and hence the transducers 111 used in the known design are relatively difficult to manufacture and comparatively expensive.
The prior art provides a 2D array of uniformly spaced wideband transducers, used to generate one or more steerable beams of sound which in turn are used to reproduce one or more channels of a one-or-more channel audio signal, e.g. stereo or surround sound. A beam is steered by inserting per-transducer time delays across the array, and multiple simultaneous beams from a given array are generated by linear superposition. However, a technically and commercially successful implementation of such a steerable arrangement has to overcome several problems, as described in the following, with:

Definitions:

DSP    Digital Sound Projector, a particular implementation of a multi-beam, steerable sonic phased array loudspeaker.
HF    High Frequency [say, > 2-4 kHz]
LF    Low Frequency [say, < 300-500 Hz]
MF    Medium Frequency [between LF and HF]

Some of the problems to be solved are:

- Achieve good directivity at low cost/complexity
- Achieve low sidelobe levels with small numbers of transducers
- Achieve good LF performance at low cost
- Make a useful DSP small enough to fit inside a television display casing
- Enable simultaneous dual-mono audio performance at low cost

**Number and Disposition of Transducers**

The number of transducers forming the array is proportional to the area of the array and inversely proportional to the square of the inter-transducer separation. Unwanted beam side-lobes (grating side-lobes) are produced by the array at frequencies above a critical frequency $F_c$, where $F_c$ is the frequency of a sound wave the wavelength of which is of the same order as the inter-transducer separation. These grating side-lobes are of the same or similar intensity to the main desired beam and of similar (narrow) beam width, and so are not easily ignored. In order to minimise the deleterious effects of these grating side-lobes the inter-transducer separation needs to be as small as possible, to make $F_c$ as high as possible. Ideally $F_c$ will be >= ~20 kHz, i.e. above audibility, but this necessitates a transducer separation of about 17mm or less, where the separation is of the order of a wavelength in air of sound at 20 kHz.
For a planar or curved 2D array, this upper limit on transducer separation determines an upper limit on transducer diameter, as bigger transducers simply will not physically fit into the array. The cost and complexity of a transducer with a given performance (e.g. sensitivity in dB/W @ 1m, maximum power capability, and bandwidth) increases very steeply as its physical dimensions are reduced, in part because the low frequency sensitivity is proportional to the square of the area of the diaphragm, and large LF output from a small diaphragm necessitates very large excursion, which in turn requires either a very long magnetic gap, or a very long, heavy and inefficient coil.

For a given transducer type, the cost and complexity of the array and its drive electronics, *C*, increases approximately linearly with the number of transducers required. In analytical form, for a 2D array of characteristic envelope dimensions width *W* and height *H* (whether or not actually rectangular), the area *A* is:

$$A = k\, W\, H$$

(where k = 1 for a rectangular array, and k<1 for other shapes such as elliptical arrays). If c is the velocity of sound in air (~340m/s), and $F_h$ is the highest frequency to be steered by the array without unwanted side lobes, then the transducer separation *S* should obey:

$$S <= c/F_h$$

(Where $c/F_h$ is the wavelength in air of sound of frequency $F_h$). Note that this result holds for the case when the beam is steered normal to the array, along the array axis. As the beam is steered off axis by some angle b then a side-lobe will first appear at ~90deg to the array axis and S will have to be reduced further to eliminate the sidelobe. When the beam is steered 90deg off axis then S must satisfy $S <= c/2F_h$ in order to prevent any grating sidelobes. In what follows we consider only the b = 0, beam on-axis case, but the considerations similar to the above still apply.

So the approximate number of transducers in the array N is given by:

$$N = k\,(W\,/\,S)\,(H\,/\,S)$$

and rounding up to the nearest whole transducer in each dimension

$$N = k\,\mathrm{Round}(W/S)\,\mathrm{Round}(H/S)$$

(Where Round(x) is some suitable rounding function that reduces its argument to an adjacent integer).

Finally we recall as stated above that cost C is proportional to the number of transducers N:

$$C = j\,N$$

where j is some approximate constant of proportionality. Thus it will be seen that the number N of transducers required is approximately proportional to k, W, H and $F_h{}^2$ (because $S <= c\,/\,F_h$).

Meanwhile the beam-steering performance of the array is proportional to its extent, i.e. the greater the value of W the narrower the possible horizontal beamwidth, and the greater the value ofH the narrower the possible vertical beamwidth. Also, the smaller the value of S (and consequently the larger the value of $F_h$) the higher the maximum steerable frequency without unwanted side-lobes. Thus cost/performance benefit is a matter of compromise between making these values smaller and larger. There is no "optimum" solution - only a set of solutions which give more or less performance for more or less cost

It should be noted that for simplicity of presentation (only) it was assumed in the above that the transducers were arranged on a horizontal and vertical rectangular (and indeed square) grid. Better practical uniform transducer arrangements are possible, including triangular grid placement, with the orientation of the grid chosen to minimise the unwanted effects of any side-lobes produced. In each such gridding arrangement different but similar formulae apply, all of which are to be included in this invention. Only the square grid arrangement is described, for clarity.

For the purposes of illustration only, some example figures will be given. A sample rectangular square-grid array is to have approximate dimensions W = 800mm, H = 600mm, and $F_h$ is chosen to be ~8 kHz (a compromise of full-range steering performance *versus* the availability of suitable very small diameter transducers). Then

$$S \mathrel{<\!\!=} c \,/\, F_h$$

$$\text{so } S \mathrel{<\!\!=} 340/8000 \sim 42.5\text{mm}$$

For practical considerations, S = 40mm is chosen. Then, as k =1 for a square-grid array,

$$N = k \; \text{Round}(W/S) \; \text{Round}(H/S)$$
$$= \text{Round}(800/40) \; \text{Round}\,(600/40)$$
$$= 20 \times 15 = 300$$

So such an array would require about 300 transducers, a separate amplifier to drive each transducer (300 in total) and a very large number of signal processing channels (depending on the number of input audio source channels) to drive the array of 300 amplifiers. This is clearly a complex and probably expensive system.

For the reproduction of stereo-only signals, or stereo signals plus only a centre-channel, it is found by modelling, analysis and experiment that sound beams with narrow horizontal dimensions work well (when bouncing the left- and right- channel sound beams off the left- and right- walls (or other reflectors of the listening area), and further, that the vertical beamwidth is relatively unimportant for successful reproduction. Thus, to reduce the cost and complexity of the array with low impact on audio performance, the H array dimension (height) can be significantly reduced relative to the W dimension (width), thus reducing the cost and complexity of the array and its electronic drivers in approximately direct proportion. In the limit, H may be reduced to the value where

$$\text{Round} \,(H\,/\,S) = 1$$

but no further, as the H dimension has to be at least as great as the vertical extent of the array transducers used, so that the vertical array beamwidth is then approximately as broad as the individual transducer beamwidth, there being essentially one "row" of transducers.

Depending on the array grid pattern used these will not necessarily be in a straight line, e.g. when a triangular grid is used. In this limiting case, the cost C is:

$$C = j \, N = j \, k \; \text{Round}(W/S) \; \text{Round}(H/S) = j \, k \; \text{Round}(W/S)$$

It is further found by modelling, analysis and experiment, that full surround-sound can also often be reproduced successfully with such Reduced-Height Arrays, or RHA. These arrays have H <<W, e.g. H < W/4 or even H < W/8 or less, or even H~S where the vertical dimension is approximately equal to the horizontal transducer spacing. Such arrays produce narrow horizontal beams but broad vertical beams, and successfully produce surround-sound in cases where the listening environment is such that there is enough space at either side of the listening area to direct a vertical fan-beam (i.e. narrow horizontally, wide vertically) past the listeners, without them hearing it on its way out towards the rear of the side walls or the rear walls of the listening area, such that it then bounces off the side and/or rear walls and returns to the listeners from behind them, producing the required effect of surround-sound.

Thus in one aspect, the invention provides acceptable performance at relatively low cost.

Size and Selection of Transducers

As discussed above, small-diameter wideband array transducers (i.e. covering LF through to HF) are costly and difficult to make, especially to cover the LF end, as they then need very large excursion, so the array as a whole is costly and not applicable to widespread consumer use.

A solution to this problem is to add one or more LF transducers through which all the LF audio components are reproduced. The remaining array transducers are then required to reproduce only mid and high frequencies, and simple low cost transducers suffice. Preferably, the LF transducers *("Woofers")* are situated at, just within, or around, the boundary of the array. These are used to reproduce all of the LF signal component (in this context LF means below about 300-400Hz) from all of the audio channels to be reproduced.

For good LF reproduction, the Woofers will generally have larger diameter than the array transducers. The placement of the Woofers at the perimeter of the array avoids disturbing the close uniform spacing of the array transducers and thus avoids the generation of additional unwanted grating-side-lobes that would occur if the Woofers were placed within the body of the array.

The distribution of the LF components can be done in several ways. In the simplest case, the LF components are filtered out from each audio input channel and distributed to the one or more Woofer(s). A refinement is to distribute the LF audio components from the left-front and left-rear channels to one or more Woofer(s) positioned on the left of the array, and the LF audio components from the right-front and right-rear channels to Woofer(s) positioned on the right of the array. This enhances the left/right separation of the audio signals. In such an arrangement, the LF audio component of the centre channel can advantageously be distributed roughly equally between the Woofer(s) positioned to the left and the right of the array. In a further refinement, the LF component of the centre channel can be distributed instead wholly or partially to a small group of wideband LF-capable array transducers at or near the centre of the array. However such central LF array transducers will necessarily have small diameter if they are not to disturb the required array-transducer spacing, and are therefore likely to be more costly and/or complex than the remaining array-transducers.

**Direct Front Channels**

When the array is placed in or close to the corner of a listening room (as opposed to the middle of one of the walls), it can be more difficult to find suitable bounce points for sound-beams representing the front-left and front-right (stereo or surround-sound) channels, so as to include a beam trajectory that reaches the listeners from the correct directions (i.e. from front-left and -right locations).

A solution to this problem is to add at least two larger LF transducers at, just within, or around, the boundary of the array, but positioned predominantly at the left and right sides of the array, and use these transducers only (i.e. and no others in the array) to reproduce the whole spectrum of the front-left and front-right channels (respectively).

It is advantageous if these LF transducers are also capable of full-range response (i.e. LF to HF, where HF means up to 15 kHz to 20 kHz). Preferably LF transducers for this purpose are wideband transducers, such as woofers fitted with "whizzer" cones.

Alternatively, if the larger LF transducers are not capable of reproducing the full left- and right-front audio channel-bandwidths, then they may be used in conjunction with one or more of the array transducers that are closest to each of the LF transducers, with a band splitter filter directing the LF components of the left- and right -channels to the left- and right- LF transducers respectively, and directing the above-LF components to the respective adjacent/ closest one or more array transducers. In this way the front-left channel issues predominantly from the left edge of the array, and the front-right channel issues predominantly from the right edge of the array, giving an acceptable rendering of the normal L and R stereo component of a two- or multi-channel source.

This approach works better the wider the physical separation of the LF transducers, and in particular in conjunction with modem 28" to 40+" visual display screens (TVs) when used for reproduction of sound together with images. However it is also applicable to smaller separations of the LF transducers. The left/right sound-stage spatial separation perceived by a listener may be enhanced further by use of any of the conventional and well known in the art wide-stereo signal processing algorithms.

**Non-uniform arrays**

Cost and complexity of surround-sound Reduced-Height-Arrays may still be too high for very-high-volume mass-consumer devices, such as television sets. For such devices to be viable it is necessary to reduce the number of transducers, driver amplifiers and signal processing channels as much as possible to minimise cost, whilst still maintaining as high a separation of front-left, centre, front-right and rear-left and rear-right channels as possible. Where the application is e.g. a wide-screen TV (e.g. a 42" plasma screen) it is desirable to have the array approximately as wide as the screen so that all front-channel sounds can be distributed appropriately across the full screen width. Given the maximum allowable transducer spacing S (described above, to prevent unwanted grating side-lobes) this has implications for the minimum number of transducers N >= Round(W/S), which may make the total cost C (=jN) too great for commercialization. A practical example: assume a 42" diagonal 16:9 aspect- ratio display screen, so that W = 930mm. If S=40mm for acoustic and transducer-selection reasons, then a full 2D square-grid array with the same height H as the screen, i.e. H= 523mm, would require

$$= 1 \times \text{Round}(930/40) \text{ Round } (523/40) = 23 \times 13$$

$$= 299 \text{ transducers.}$$

Even in the limiting case where the height H of the 2D array has been reduced to the height of one transducer (in this square grid example) this still requires

$$\text{Nmin} = \text{Round}(930/40) = 23 \text{ transducers}$$

together with 23 drive amplifiers and many signal processing channels (e.g. for a 5-steered sound-beam system, a minimum of 5 x 23 =115 signal processing channels).

A potential solution to this cost/complexity problem is now described. Firstly using the approaches described above the array transducers can be implemented with non-LF low-cost devices, and at least one pair of larger diameter, LF or wideband transducers used at the left and right edges of the array to reproduce the LF audio components, and possibly also the full front-left and front-right channels (for stereo and/or surround-sound). However, even in the limiting height case (array is 1 transducer high), these techniques still require a significant number of array transducers, and for the example just given a minimum of a further 21 (or thereabouts) array transducers between the LF transducers. Increasing the array transducer spacing S would reduce the cost and complexity but increasing the transducer spacing S beyond the design target of 40mm would produce unacceptable full-amplitude side-lobes around and above 8 kHz which would frequently be directed straight at the listeners when the intended beam direction was intended to miss one or more or all of the listeners (e.g. a rear-left or -right channel beam intended to be heard only after one or more wall or ceiling bounces).

The solution is to reduce the number of transducers to an economically acceptable number, say, Nred < Nmin, but instead of using uniform inter-transducer spacings as is conventional, making the inter-transducer spacings non-uniform, and in particular making the spacings between pairs of adjacent transducers increase the further the pair is from the centre of the array. The effect is to 'smear out' the grating side-lobes, reducing their maximum amplitude and therefore reducing their nuisance value.

There are many ways to achieve this effect, some of which are beneficial in this respect, in that they allow a smaller total number of transducers to be arrayed over a given length (or height) or overall array size, whilst avoiding the generation of unwanted full-amplitude grating side-lobe beams. One particularly beneficial scheme is described below, where the process is described for one of the principal dimensions of the array (e.g. width, or height, for a square/ rectangular array, or one of the three primary directions of a triangular array):

i) first decide whether to use an even or odd number of transducers in this dimension of the array;
ii) if even, then the first (central) pair of transducers will be evenly spaced about the centre line (in this dimension) of the array; if odd, then the first transducer is placed at the centre of the array in this dimension;
iii) next if odd distribute the remainder of the transducers, or if even all of the transducers, so that the average array amplitude density along this dimension, using uniformly driven transducers, approximates to a useful aperture illumination function e.g. rectangular, cosine, Hanning, Hamming, Gaussian, etc. One method for determining such a spacing scheme is described below.

A variant on the scheme just described uses different power levels being supplied to one or more of the transducers (perhaps because these are different transducers with greater or less power handling capability, as e.g. when one of the transducers at or near the end of such an array is a woofer, and possibly a wideband woofer): in this variant scheme the same goal is aimed for - i.e. with the particular power or amplitude distribution to the individual transducers chosen for these other reasons, the average local amplitude density of the array is made to closely follow a desired aperture illumination function by appropriate spacing of the transducers, and in general, transducers with higher amplitude become spaced further from their neighbours than they would have been otherwise, and transducers with reduced amplitude become closer spaced to their neighbours (i.e. than in the initial non-variant scheme).

The key advantage of such distributed spacing schemes is that it changes the narrow, full-amplitude regularly spaced grating side-lobes produced by a regular array (above its critical spacing frequency), into broad low amplitude distributed spaced side-lobes, which therefore do not specifically "point" in any one direction and so cause less perceptual effect on listeners "within" a side-lobe.

One beneficial method of selecting non-uniform array transducer spacings according to the above described schemes is now described. For simplicity a one dimensional array structure with uniform transducer amplitudes is described, but the method easily generalises in two or more dimensions, with non uniform transducer amplitudes, which schemes are also part of this invention.

The essence of this scheme is to make the linear source-amplitude density (for 1-D arrays) or the areal source-amplitude density (for 2-D) arrays averages over the local (adjacent) transducers follow a useful window or apodisation function, common examples of which include Cosine, Hanning and Gaussian. In general, for uniform driven transducers, their separation is greater in those parts of the array aperture where the apodisation-function is lower (and generally these functions decrease smoothly from the array centre towards the array edges).

One particular implementation is now described. (We use the notation y = integral(x) from a to b below to indicate that y is the definite integral of x between the limits x=a and x=b.)

A) Choose an array length L [length units], and define a scaling factor S = 1/L. Define scaled distance units x such that the array length becomes unity.

B) Choose an aperture weighting function, e.g. W(x) = cos(pi x/2)

C) Choose the number N of transducers in the array

D) Let the transducers numbered 0, 1, 2, ... N-1 be positioned at x = $X_0$, $X_1$, $X_2$, ... $X_{N-1}$ [NB in scaled distance units]

E) Let A = integral(W(x)) from x=$X_0$ to x=$X_{N-1}$

i.e. the total window amplitude; then what is required is that the aperture between each of the (N-1) adjacent pairs of transducers at $X_i$,

$X_{i+1}$ on average makes an equal contribution y(i) = A/(N-1) to the total amplitude.

F) Then set $X_0$ =-1/2; the first transducer is at x=-1/2 by definition

G) Find $X_1$ such that

$$y(0) = A/(N-1) = \text{integral}(W(x)) \text{ from } x = X_0 \text{ to } x = X_1.$$

[note that for integrable window functions W(x) this may be solved easily analytically. For more complicated window functions it may be easier to solve numerically]

H) Find the remaining $X_i$ sequentially from i=2 to N-1 by a similar computation, i.e.

$$y(i\text{-}1) = A/(N-1) = \text{integral}(W(x)) \text{ from } x = X_{i-1} \text{ to } x=X_i.$$

I) It will be found that to a good approximation $X_{N-1}$= +1/2, i.e. the Nth transducer is at the end of the unit-length array. Then the positions in [length units] of the transducers in the array are found by dividing the $X_0$, $X_1$, $X_2$, ... $X_{N-1}$ by S.

In practice it is found that additional useful transducer spacing distributions can be generated by defining a linearity-parameter R, 0 <= R <=1, where R=0 produces a uniform spacing and R=1 produces a fully non-uniform spacing as calculated by the above method. First, the weighting function W(x) is replaced by a normalized version W'(x) such that

$$1 = \text{integral}(W'(x)) \text{ from } x = X_0 = -1/2, \text{ to } x = X_{N-1} = +1/2;$$

Similarly it will be seen that a normalized uniform or rectangular weighting function U'(x) = 1, has the property

$$1 = \text{integral}(U'(x)) \text{ from } x = X_0 = -1/2, \text{ to } x = X_{N-1} = +1/2;$$

Then in steps G) & H) above instead use

G) Find $X_1$ such that

$$y(0) = 1/(N-1) = (1 - R) \, \text{integral}(U'(x)) + R \, \text{integral}(W'(x))$$

Where as before both integrals are from $x = X_0$ to $x = X_1$.
J) Find the remaining $X_i$ sequentially from i=2 to N-1 by a similar computation, i.e.

$$Y(i-1) = 1/(N-1) = (1 - R) \, \text{integral}(U'(x)) + R \, \text{integral}(W'(x)),$$

again integrating from $x = Y_{i-1}$ to $x=X_i$.

An infinite family of such transducer spacing distributions can thus be computed for each and every aperture weighting function W(x) by choosing a value of R such that 0 <= R <= 1. Particular values of R generate particularly useful array structures for applications of the sort described elsewhere in this application. For example R - 0.8 with W (x) = Cos(pi x/2) gives a very wide spatial distribution of the sidelobe energy with low maximum peak sidelobe amplitude suitable for presenting a different programme simultaneously to each of two (or more) listeners, but many other values of R have useful effect, and may be selected by implementing the above described algorithms on a computer and then using the output values of $X_i$ for the input positions of transducers to another program (or another part of the same program) that models the beam shape produced by such an array.

A different family of transducer non-uniform spacing schemes which has slightly different characteristics is based on a geometric progression of successive transducer pair spacings, starting from the centre of the array. A pure geometric progression (where the ratio of ( $X_{i+1} - X_i$ ) to ($X_i - X_{i-1}$) is a constant for j <= i<=-1), where j is the number of the first transducer at or right of centre (i.e. j = N/2 or (N+1)/2), and where transducers numbered less than j are positioned with mirror symmetry about the centre of the array, gives good results and has the particular property of greatly reducing the first beam skirt amplitude as well as the amplitude of the grating sidelobes. Again, a parameter R can be defined which creates a smooth blend between a pure uniform array spacing (R=0) and a non-uniform spaced geometric progression spacing (R=1), in a functionally similar way to that described above, with all the values of R in between giving rise to another infinite family of spacings which can be selected from, to optimise whatever features of the beam and side-lobes matters most in a given application. It can be shown that a non-uniform exponential transducer spacing is equivalent to a geometric progression spacing.

A geometric progression of successive transducer distances from array centre, again symmetrical about the centre of the array, is used in a further different family of transducer non-uniform spacing schemes. A pure geometric progression (where the ratio of ($X_{i+1} / X_i$) to ($X_i / X_{i-1}$) is a constant for j <= i <= N-1), where j is the number of the first transducer at or right of centre, and where transducers numbered less than j are positioned with mirror symmetry about the centre of the array, can also be useful. Again, a parameter R can be defined which creates a smooth blend between a uniform array spacing (R=0) and such a geometric progression distance-from-centre (R=1), in a functionally similar way to that described above, with all the values of R in between giving rise to another infinite family of spacings.

Similarly, yet another spacing scheme uses spacings of the form

$$( X_{i+1} - X_i) = p \, \log(I \, q)$$

where p and q are constants. Again such a spacing scheme has a range of beam-shape and side-lobe shape properties which are useful in particular circumstances.

The effect of any of these choices of appropriately non-uniformly spacing the array transducers is that the grating side-lobes are now no longer full amplitude (i.e. of similar intensity to the desired main beam) - they can be reduced in amplitude such that the maximum side-lobe peak amplitude is reduced at least 5dB, and generally 10 dB, below the signal beam amplitude. Thus the minimum acceptable number of transducers in such an array is no longer controlled by the ratio of array envelope dimension to maximum allowable spacing (i.e. ~W/S x H/S) but instead by a selectable compromise between a very small number of transducers and an acceptable signal-to-noise ratio (signal in this case being audible level of sounds from the desired directions, and noise being audible level of sounds from smeared-out beam side-lobes). This gives the array designer an additional degree of freedom to balance cost against performance.

Note that these improvements in array performance have been achieved without the use of any additional signal processing - i.e. only frequency-independent signal delays need be applied and no special extra filters have to be added to each transducer drive channel to achieve these benefits (other than perhaps in some cases a simple amplitude weighting function that can be performed with marginal additional computation or electronic circuitry), and thus no additional costs are incurred. This is particularly valuable in the case that the array is being used to direct different sounds to different listeners who may be quite close to each other, which is a special case of the capability described in the co-owned patent Number WO01/23104. For example, first consider the case of a uniform spaced array when it is desired to present to one listener L1 on one end of a sofa audio program AP1 (perhaps associated with video program VP1 displayed on a screen in view of the sofa), and to a second listener L2 perhaps on the other end of the same sofa, audio program AP2 (perhaps associated with video program VP2 on the same or another screen in view) by means of a second sound beam. The two listeners will subtend a certain angle A at the centre of the array in the horizontal plane (and normally be on roughly the same horizontal level, but possibly different levels if one listener were, e.g. sitting on the floor). Now when the beam directed at L1 contains frequencies Fx above $F_c$ where the side-lobe beam at Fx is separated from the main beam by the same angle A so that it is directed to L2, then L2 will hear L1's programme audio at that frequency Fx at full power, and adjacent frequencies to Fx of L1's audio programme at significant but progressively reduced level the further the frequencies differ from Fx. This interference can be very disturbing. Depending on the value of $F_c$ for the particular array, and the angular separation of the listeners, there can be several frequencies Fx1, Fx2, ... at which this occurs simultaneously. Contrast this case with what happens when an may of the same overall dimensions uses well designed non-uniform transducer spacing. Now there is no frequency Fx at which L1 unintentionally hears L2's programme at full level - indeed even with a significantly reduced number of transducers in the non-uniform array (compared to the number in the similar sized uniform array), the spurious side-lobe levels reaching the unintended listener can be designed to be 5dB or more below the level perceived by the intended listener. This is thus a very valuable improvement in performance over that of a more costly and complex uniform array.

Similar advantages of reduced side-lobe interference can be gained when using the non-uniform array for multi-beam surround- sound performance, with better separation between directions of arrival at the listener.

## Variants of non-uniform arrays

Two further beneficial variants of non-uniform arrays, non-uniform transducer size and asymmetry in transducer position, are now described.

In the non-uniform arrays described above, the array transducers are closely spaced in the centre and more widely spaced towards the ends of the array. It is therefore possible to fit transducers of larger diameter in the positions away from the centre. Indeed, as the spacing gradually increases towards the edge, so can the transducer diameter gradually increase towards the edge. The benefit is that larger diameter transducers have increased sensitivity and improved efficiency compared to smaller diameter transducers, and generally cost about the same. Thus the overall performance can be improved for little or no increase in cost.

In the non-uniform line arrays described so far, the general arrangement of transducers is that adjacent pairs of transducers have increasing separations, the farther that pair of transducers is from the centre of the array. This tends to give an array that is symmetrical about a vertical centreline.

If the non-uniformity of spacing of transducers positioned on either side of the array centre is **not** symmetrical about the centre i.e. transducer positions are not mirror images about the centre) then further reduction in maximum sidelobe values can be achieved (i.e. the sidelobes are even more "smeared out" by the asymmetry).

Using the method described previously for generating a geometric series of spacings, with non-linearity parameter R where 0<=R<=1, the method produces symmetric transducer positions either side of the centre line. An asymmetric non-uniform pattern can be created by using a different value of parameter R for the transducer positions on either side of the centre line. In this case, the spacings on both sides of centre are still geometrically related, but the actual spacing values on each side of centre are different.

An example of this in practice follows. This is a 1D example that is given for clarity of description but the approach works equally well in 2D and 3D.

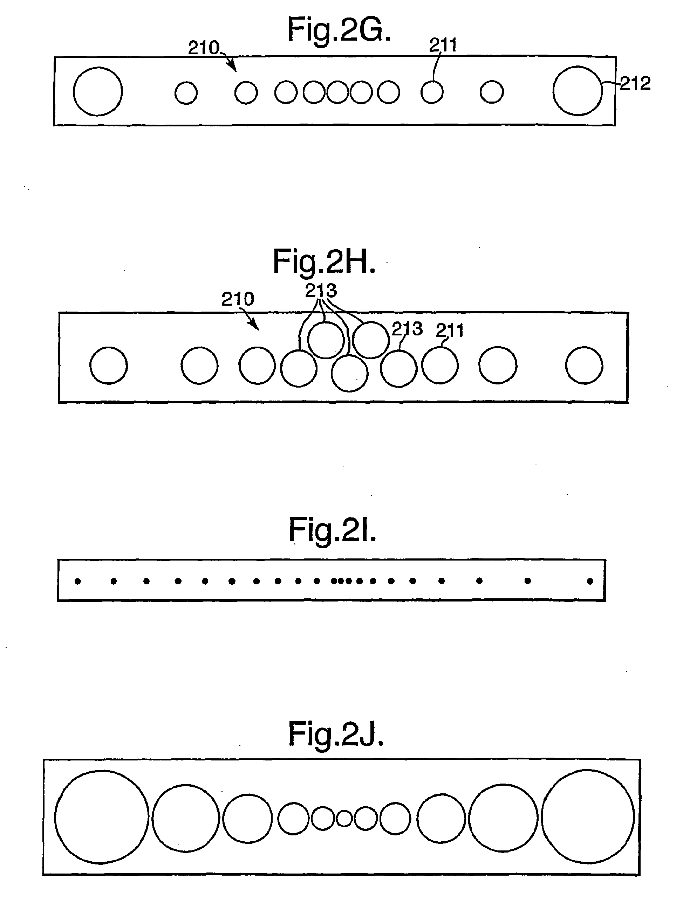

Consider a 1m length array, with 21 transducers. At 19.75 KHz, with the beam steered directly ahead (normal to array) the smallest maximum sidelobe value from -90deg to +90deg is achieved with R=0.98, symmetric geometric transducer spacing about a vertical centreline, the maximum sidelobe level is then-7.73dB. By going to an asymmetric non-uniform spacing with R (left) = 1.0, and R (right) =0.41 (see Fig. 2I), the maximum sidelobe level falls to -9.33dB, giving a worthwhile 1.6dB improvement, for no extra components, array size or signal processing.

A number of possible arrangements to implement the solutions described above are shown in FIGS. 2A-H where small circles represent high frequency transducers (referred to in the claims as first transducers) and larger circles represent low frequency or wideband transducers. The high frequency transducers are incapable of adequately outputting low frequency audio signals.

Referring now to FIG. 2A, there is shown the front face 200 of a first transducer array loudspeaker system in accordance with the present invention.

The novel Sound Projector includes an array 210 of 132 small high frequency (HF) transducers 211 having a diameter of 38 mm mounted on a 40mm equilateral triangular pitch, the triangular pitch oriented so that the base or tops of the triangles are parallel to the width of the array. The quasi elliptical array comprises a center horizontal row of 17 transducers, and the layout of the remainder of the transducers is generally symmetrical about this horizontal centre line in a triangular grid, comprising successively adjacent rows of 16, 15, 12, 9/10 and 4/6 transducers above and below the row of 17, making 132 in all.

The transducers are hence arranged as a dense (triangular) array where the centre of a transducer is placed on the middle line between two transducers in the row above or below or, equivalently, of the column to its left or right. The number of transducers per row or column increases towards the middle of the array giving the array an oval shape.

The array 210 is mounted on a rectangular base plate 201 leaving corners for the mounting of four equal-sized low frequency (LF) transducers or woofers 212. The low frequency transducers have a diameter of about 105 mm. The center-to-center spacing of the LF transducers exceeds 200 mm. The centre-to-centre distance between the LF transducers and the HF transducers ranges from 85 mm to 240 mm.

The overall dimensions of the base plate are 734 mm length and 434 mm height thus matching approximately the size of one class of commercially available television sets.

The -3dB cut-off frequency Fc of the 38mm diameter high frequency transducers is approximately 400Hz corresponding to a cut-off wavelength of c/Fc = 0.86 m. To reduce sidelobes the mid-point spacing between the closest low frequency transducers is therefore best set to around 0.43 m and the area between the low frequency transducers is densely filled with the high frequency transducers.

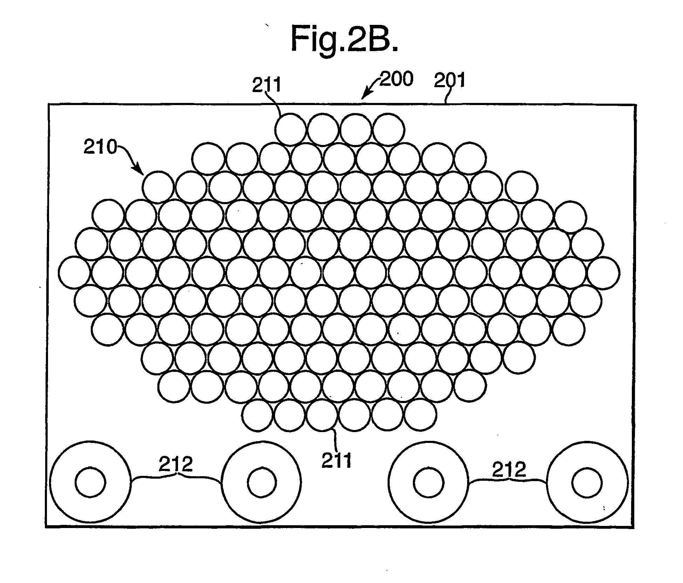

This constraint on the woofer spacing can be relaxed by effectively reducing the cut-off frequency through signal amplification that is adapted to compensate for the drop in the response curve of the high frequency transducer below Fc. However, undesirable phase shifts are introduced through this process, which can be referred to as "over-driving". In spite of the phase shifts, the phase of all transducers should remain controllable for the purpose of introducing accurate delays to steer the sound emitted from both high and low frequency transducers. Therefore, the signal processing described below can include a phase shifting or compensating filter introduced in the signal path of, for example, the woofer signals. In the variant of FIG. 2B, the low frequency transducers 212 are mounted along a line located at the bottom edge of the main array 210. In this case, the low frequency transducers can form a sub-array to steer sound to a higher frequency (related to the transducer spacing) than in the case shown in Fig. 2A.

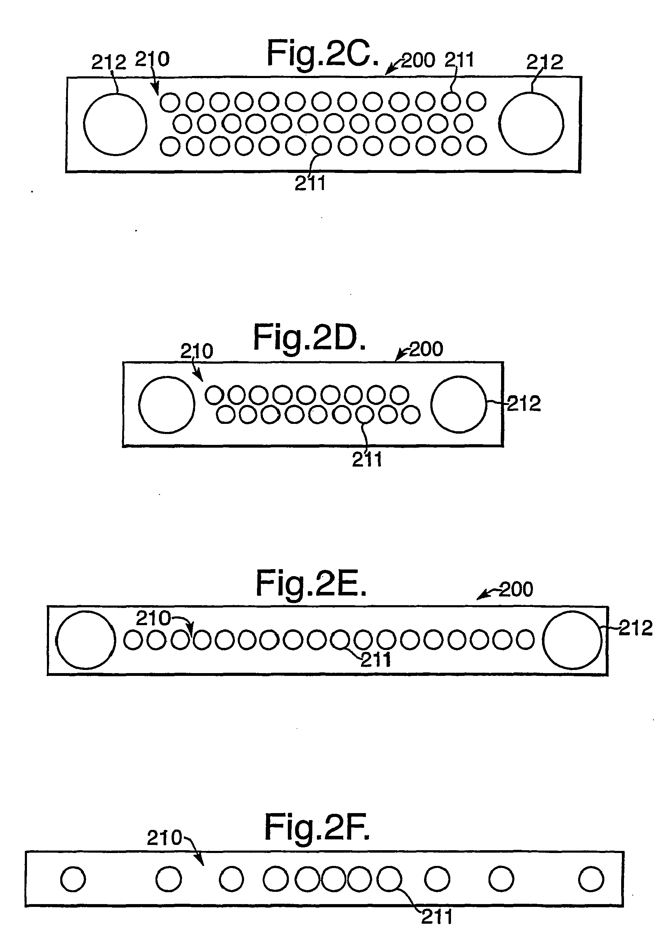

Further variants of the invention are shown in Figures 2C to 2J. Figures 2C, 2D and 2E show Reduced Height Arrays 200 of the invention. In each, an array 210 of high frequency transducers 211 extends in the horizontal direction, the height of the array being much less than the width. Each array is terminated at each horizontal end by a larger diameter transducer 212 capable of low frequency only or broadband (low, mid and high frequency) transmission. In Figures 2C and 2D there are three and two rows of transducers respectively, while Figure 2E shows a single line of transducers. Such Reduced Height Arrays are less complex and hence less costly than the larger arrays shown in Figures 2A and 2B, and their compact form makes them well suited for installation in or next to (preferably below or above) a television screen.

Examples of non uniform arrays of the invention are shown in Figures 2F to 2J. The horizontal spacing of the high frequency transducers 211 varies along the length of the array 210, the spacing being larger towards both ends of the array. In Figure 2F is shown an array 210 of transducers 211 which are all the same size while Figure 2G shows the end transducers replaced by larger-diameter transducers 212. Figure 2H again shows transducers 211 all the same size, but in this case the transducer diameter is too large to allow them to be arranged on a straight line. In this case the 5 transducers 213 in the centre of the array are staggered, that is they are displaced vertically, while their horizontal spacing remains the same as in Figures 2F and 2G. The arrangements of Figures 2F to 2G allow the production of highly directional sound beams without the generation of unwanted sidelobes, and are therefore particularly advantageous in applications such as dual mono or surround sound.

Figure 2I shows an example of transducer separation that is both non-uniform and non-symmetrical about a vertical centreline. This configuration has been found to achieve useful extra performance in terms of side lobe reduction.

FIG 2J shows a non-uniform array in which the transducer size increases towards the ends of the array, such that the transducers are closely spaced throughout, even though their spacing varies. Larger transducers are more sensitive and more efficient than smaller transducers, so such an arrangement is likely to provide improvements in performance. The transducers shown in Figure 2J have the same inter-transducer spacing as Figures 2F to 2H.

In the following there are described various components of the novel Sound Projector. Most of the components are similar or identical to those used in the known system and only require adaptation to the novel arrangement.

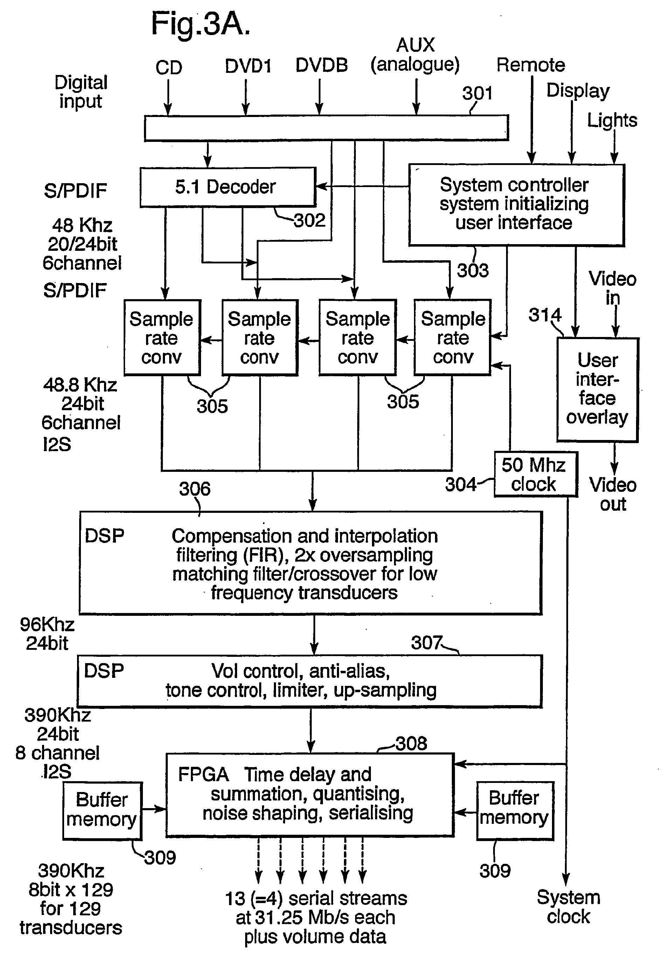

Referring to FIG.3A, at the input **301 ,** audio source material is received from devices such as compact disks (CDs), digital video disks (DVDs) etc. by the Sound Projector as either an optical or coaxial electrical digital data stream in the S/PDIF format or other industry standard format. This input data may contain either a simple two channel stereo pair, or a compressed and encoded multi-channel soundtrack such as Dolby Digital™ 5.1 or DTS™, or multiple discrete digital channels of audio information.

Encoded and/or compressed multi-channel inputs are first decoded and/or decompressed in a decoder 302 using the devices and firmware available for standard audio and video formats. An analogue to digital converter (not shown) is also incorporated to allow connection (AUX) to analogue input sources which are immediately converted into a suitably sampled digital format. The resulting output comprises typically three, four or more pairs of channels. In the field of surround-sound, these channels are often referred to as left, right, centre, surround (or rear) left and surround (or rear) right channels. Other channels may be present in the signal such as the low frequency effects channel (LFE).

These channels or channel-pairs are each fed into sample-rate-converters (SRC) **305,** which convert the signals into an internal data flow of 48.8 KHz and 24bit quantisation synchronised by the clock signal of the internal system clock **304.**

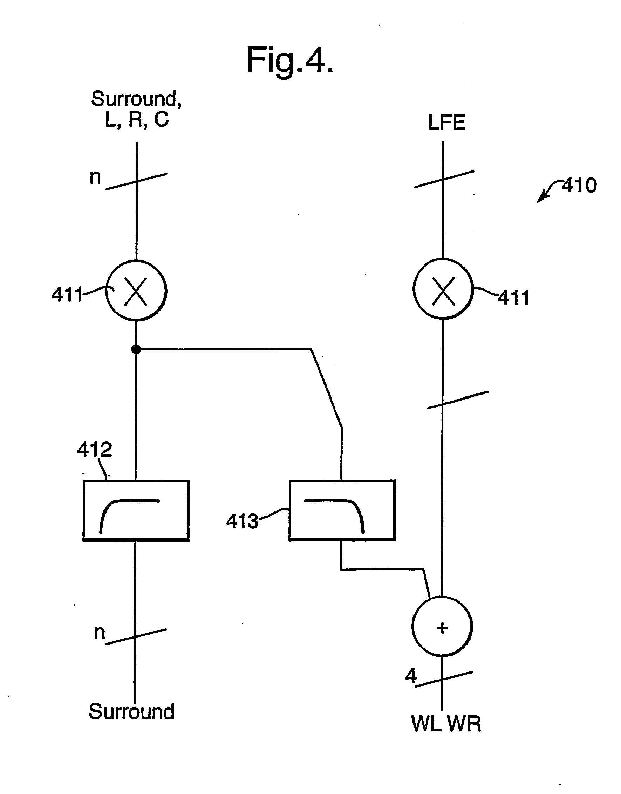

The signal stream then enters a digital signal processing (DSP) stage **306** that provides compensation for characteristics or performance of the transducers, interpolation and up-sampling to a 96 Khz signal stream. Within this DSP stage there is also implemented a matching filter to remove low frequency content from the signal stream as described in more detail with reference to FIG. 4 below.

A further DSP stage **307** performs anti-alias and tone control filtering on all input audio channels (typically 8), and over-sampling and interpolation to an overall eight-times oversampled data rate, creating 8 channels of 24-bit word output samples at 390 kHz. Signal limiting and digital volume-control is performed in this DSP stage too.

The DSP stage includes one or more digital signal processor units. These can be implemented using commercially available DSPs. Some or all of the signal processing may alternatively be implemented with customised silicon in the form of an Application Specific Integrated Circuit (ASIC).

A microprocessor, typically based on an ARM (RTM) core, in the control user interface unit **303** calculates timing delay data for the transducers of the array, from real-time beam-steering settings sent by the user to the digital Sound Projector via a remote control or an interfacing computer device. Alternatively this timing calculation can be transferred to the more powerful DSPs. Given that the Sound Projector is able to independently steer each of the output channels (one steered output channel for each audio input channel, typically 4 to 6), there are a large number of separate delay computations to be performed. This number is equal to the number of steered output channels times the number of transducers. If the digital Sound Projector is also capable of dynamically steering each beam in real-time, the computations also need to be performed without noticeable delay. Once computed, the delay requirements or times are distributed to a field programmable gate array (FPGA) **308,** where the delays are actually applied using high speed static buffer RAM buffers **309** to produce the required delays applied to the digital audio data samples of each of the eight channels, with a discretely delayed version of each channel being produced for each of the output transducers (132 in the implementation of Fig. 2A). Alternatively, this delay function can be carried out more cost effectively within an ASIC. The ARM core in the control user interface **303** also handles all system initialisation and external communications.

The signal stream enters the FPGA logic that controls the high-speed static buffer RAM devices **309.**

In the known device, the 132 signals of 24-bit width and at 390kHz are then each passed through a quantizing/ noise shaping circuit also implemented in the FPGA **308** of the DSP stage to reduce the data sample word lengths to 8 bits at 390kHz, whilst maintaining a high signal-to-noise-ratio (SNR) within the audible band (i.e. the signal frequency band from ~20Hz to ~20kHz) using a noise shaping technique. It is further possible to add at this stage a weight to each of the transducer outputs in accordance with a desired window function.

The data stream with reduced sample word width is distributed in 13 serial data streams at 31.25 Mb/s each and containing additional volume level data. Each data stream is assigned to one of 13 driver boards. Four additional signal streams are assigned to the drivers of the low frequency transducers.

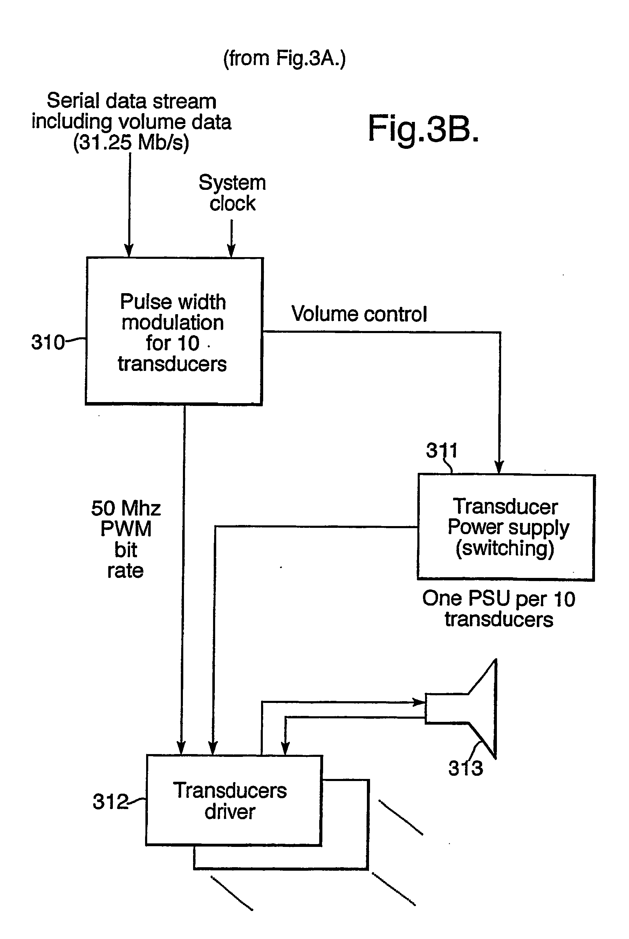

The driver circuit boards, as shown in FIG. 3B, which are preferably physically local to the transducers **313** they drive, provide a pulse-width-modulated class-BD output driver circuit **310, 312** for each of the transducers they control. Other power amplifiers are also applicable.

The supply voltage to the driver circuits is varied by low-loss switching regulators **311** mounted on the same printed circuit boards (PCBs) as the class-D power switches. There is one switching regulator for each class-D switch to minimise power supply line inter-modulation. To reduce cost, each switching regulator can be used to supply pairs, triplets, quads or other integer multiples of class-D power switches.

Any low frequency or wideband transducer can be made part of the steerable array by including it into the number of transducers **313** and providing it with a delayed signal. The delay is calculated as with any array transducer in the FGPA **308.** With such modifications the LF transducers contribute either to a steered beam of sound or can be controlled as a sub-array independent of the main array.

The low frequency content is filtered from all of the input channels and added to form a signal stream to be emitted by the four low frequency transducers. The basic diagram of FIG. 4 shows the crossover or matching filter components within the Sound Projector. The multi-channel audio signal is assumed to arrive as an encoded digital bitstream separated into the various audio channel signals including left **L**, right **R** and centre **C** channel, the surround channels **SC** (surround or rear left, surround or rear right etc.) and the low frequency effect channel **LFE**.

The thus decoded signals form the input to the crossover system **410.** As shown in FIG. 3, the n surround channels and the L,R, C channels after suitable gain adjustments **411** are both band split using high pass and low pass filters **412, 413** and their low frequency content is added together with the **LFE** signals to the low frequency channel to be ultimately emitted through the left and right low frequency or woofer channels **WL, WR** that combine the output of the low frequency woofers to the left and right, respectively.

The matching filter or crossover system **410** shown in FIG. 4 is conveniently implemented as sub-sections of the digital signal processing unit of the Sound Projector as described above.

If all audio frequencies (e.g from say 70Hz to 20KHz) were supplied to the woofers as well as to the high frequency transducers, then some additional unwanted grating sidelobes would result, starting to appear at a frequency of ~1.3KHz (due to the 240mm longest centre-to-centre gap between woofer and high frequency transducers) and becoming more prevalent and stronger in amplitude at frequencies between ~1.3KHz and ~3.8kHz due to the range of gap sizes.

It has been found by modelling and by experiment that by setting the low pass matching filter in series with the woofer such that it starts to reduce amplitude around 1.3KHz and almost completely cuts off (i.e. attenuating at -20dB or more) at around 3.8KFiz then some useful effective increase in the size of the array (due to the added extent of the woofers) can be achieved, together with an associated decrease in radiated beamwidth for the same reason, and that the additional grating lobes produced can be kept small in amplitude (e.g. <~- 20dB than the main beam(s)).

The absolute amplitude of the signals fed to the low frequency transducers or woofers is correspondingly greater than the signal level fed to each high frequency transducer, such that the radiated acoustic areal power density (in the plane of the panel 201) is approximately constant in the part of the audio band where the woofers are being used as an areal extension of the main transducer array, which in this example might be in the range of [~300 to 400Hz] to [1KHz to 1.3KHz] - the woofers having greater radiating area than the HF transducers consequently are required to radiate more acoustic power than each of the HF transducers; the relative sensitivity of the two types of transducer needs to be taken into account when satisfying this condition, and their power handling capability also needs to be observed.

Again, in this example, substantially all of the low frequency power is fed to the woofers (and little or none to the MF/HF transducers) in the audio band below [-300 to 400Hz]. In the transition region between ~1KHz and ~4KHz the LP filter blends in successively less and less power with increasing frequency which gives a useful increase in beam tightness (decrease in beamwidth) over that band with little impact on the grating sidelobe performance of the array.

The filter of FIG. 4 can also be used to filter the front-left and front-right channel from the input signal and direct it exclusively or non-exclusively onto the low frequency or wideband transducers.

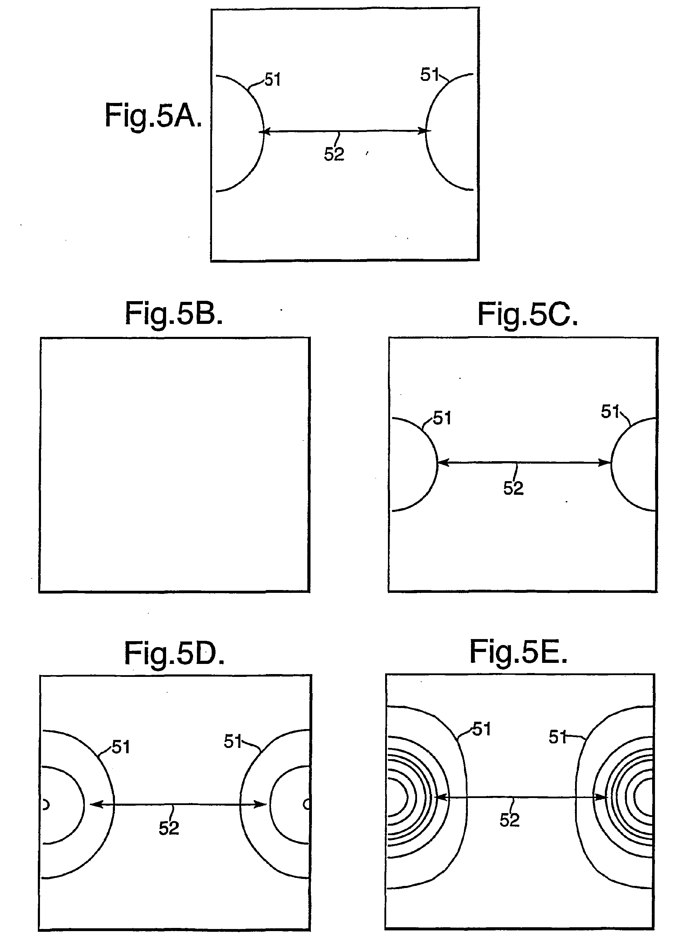

The above described system is capable of emitting beams of sound of a quality that surpasses in certain aspects those produced by known larger arrays as described for example in the above-referenced international patent applications WO 01/23104 and WO 02/078388. In FIG. 5, there are shown simulated contour plots comparing the intensity profile of a sound beam generated by the known 256 transducer array arranged as shown in FIG. 1 with beams generated by an array of the invention as illustrated in FIG. 2A. The beam has a frequency of 300 Hz and is directed straight ahead of the array; thus the direction of the beam centre is in the centre of the plot. The plot axes are angular (i.e. -90 degrees to +90 degrees, with 0 degrees at the centre), horizontally and vertically.

The contour plot of FIG. 5A shows a first contour line 51 marking a drop in sound energy (e.g. -3dB). The beam width is proportional to the distance between the two parts of the contour line 51. In FIG. 5B the beam is generated by an array as shown in FIG. 2A without making use of the four low frequency transducers. The first contour line 51 is not visible, indicating a broader beam than shown in FIG. 5A. In FIG. 5C the four low frequency transducers in the corner are driven by a signal of strength/amplitude 10 relative to the drive signal for the transducers of the main array. The two branches of the contour line 51 are now again visible illustrating the beneficial effect of the additional low frequency transducers in narrowing the beam. The double arrow 52 indicates the distance between the countour lines 51 in FIG. 5C; the same length arrow is shown in the other plots so as to allow a comparison between the cases illustrated. In FIG. 5D the four low frequency transducers in the corners are driven by a signal of strength 32 relative to the drive signal for the transducers of the main array making the output of both parts of the array almost equal. Again both branches of the contour line 51 moved closer together, and a next lower contour line also appears, indicating further beam narrowing. In FIG. 5E the four low frequency transducers in the corner are driven by a signal of strength 100 relative to the drive signal for the transducers of the main array. The sharpness of the beam, as indicated by the additional contour lines, is further improved.

The quality of the beam (tightness and reduction of unwanted sidelobes) may be further improved by using an irregular spacing between the transducers thus varying the distance between neighboring transducers or introducing windowing functions in the signal path that limit the array size (and hence the number of emitting transducers) depending on the frequency of the emitted signal.

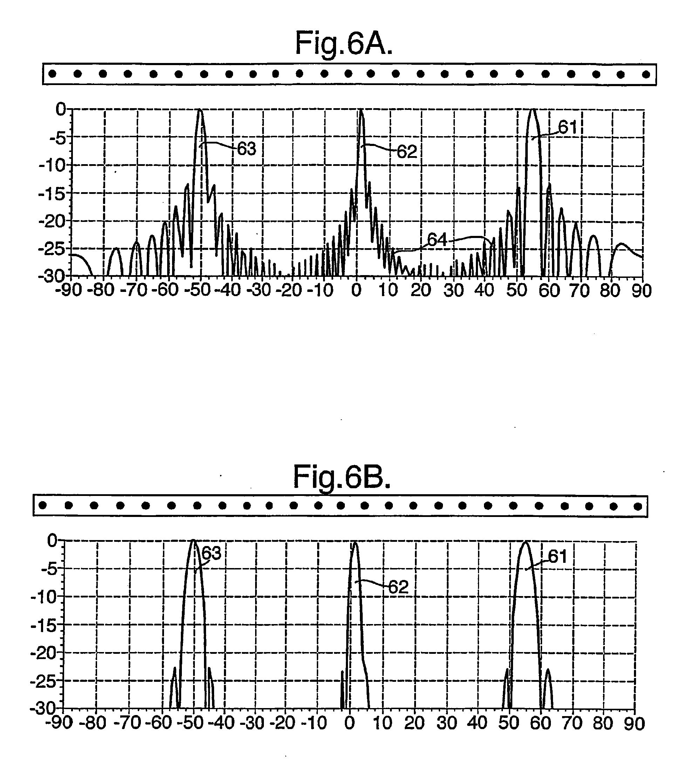

The effects of non-uniform spacing and windowing are shown in FIGS 6A-G, all of which refer to line arrays 1 m long with 25 transducers. At the top of each figure is shown a series of solid circles, indicating the transducer layout and spacing (the size of the circles is not to scale). At the bottom of each figure is a computed plot of sound pressure level (SPL) in dB against angle, where zero degrees is the forward direction normal to the Sound Projector plane.

Figures 6A and 6B show a uniform array without and with apodisation (windowing) respectively. A 10 kHz sound beam is steered right 55 degrees, resulting in the peak 61 on the right At this frequency, full amplitude side-lobes 62,63 occur at 0 degrees and -50 degrees. Without windowing, Figure 6A, the main beam(s) have 'skirts' of multiple aperture-lobes 64. In Figure 6B, Cosine window apodisation in accordance with the invention has been applied, and the 'skirts' have disappeared. This improves the tightness of the beam.

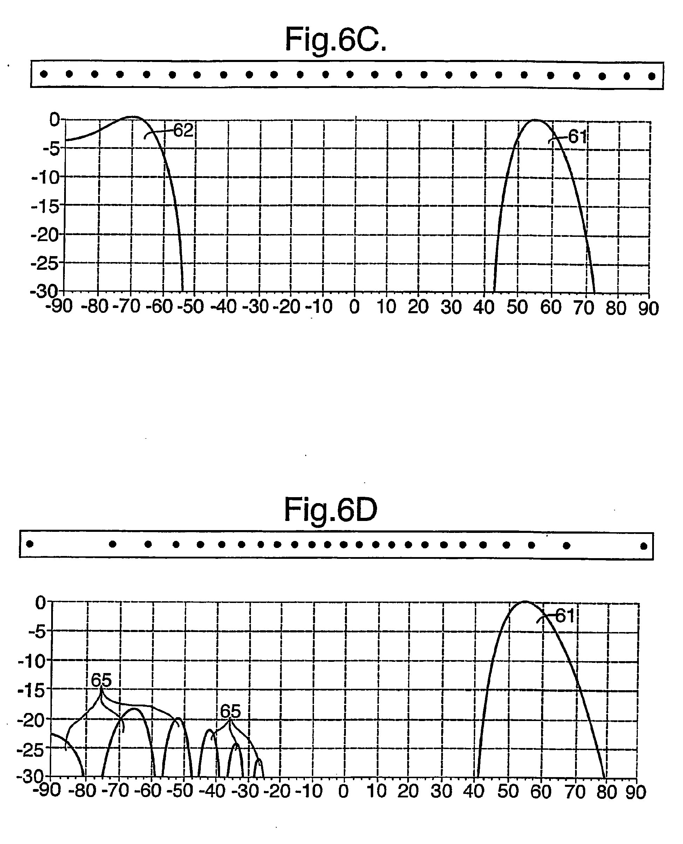

Figures 6C and 6D show arrays with uniform and non-uniform transducer spacing respectively. A 4.5 kHz beam is steered right 55 degrees with Hanning window apodisation. In the uniform array, Figure 6C, the main beam 61 at 55 degrees has a full power side lobe 62 at -70 degrees. With non-uniform transducer spacing in accordance with the invention, Figure 6D, the full power side-lobe has been smeared out to produce a series of side-lobes 65 of much reduced amplitude. These are everywhere more than 17 dB lower than the main beam. Such side-lobes are barely detectable by the listener and this arrangement therefore produces improved sound fields, for example in stereo, surround sound or 'dual mono' applications.

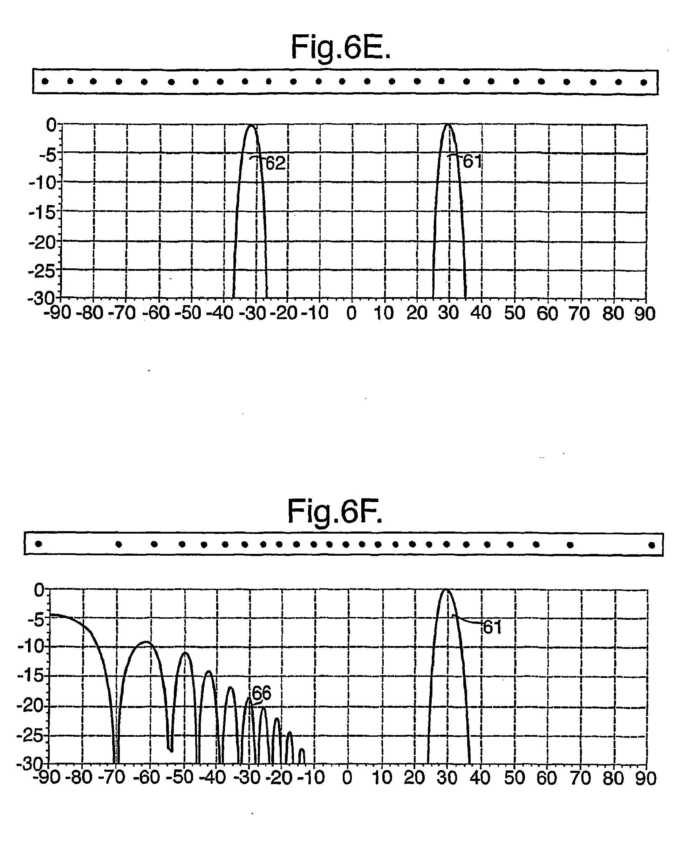

Figures 6E and 6F illustrate further the benefits of non-uniform arrays for 'dual mono' applications, where two listeners are listening to two different audio programmes. As before, the main beam (at 7.8 kHz, Hanning window) is steered right, in this case 30 degrees, where perhaps a first listener is sitting. With uniform transducer spacing, Figure 6E, there is a full power sidelobe 62 in addition to the main beam 61. The sidelobe 62 is in the direction 30 degrees left, which is likely to be around where a second listener would be sitting. If the second listener is listening to a second, different, audio programme (which could be produced by the Sound Projector as a second sound beam steered to 30 degrees left), they will be much disturbed by the loud side-lobe from the first listener's programme. In contrast, with a non-uniform array, Figure 6F, there are no full power (0 dB) side-lobes, and at the second listener's position of 30 degrees left, the side-lobe 66 is 17 dB down compared to the main beam. This is barely audible, particularly if the second listener is listening to their own audio programme.

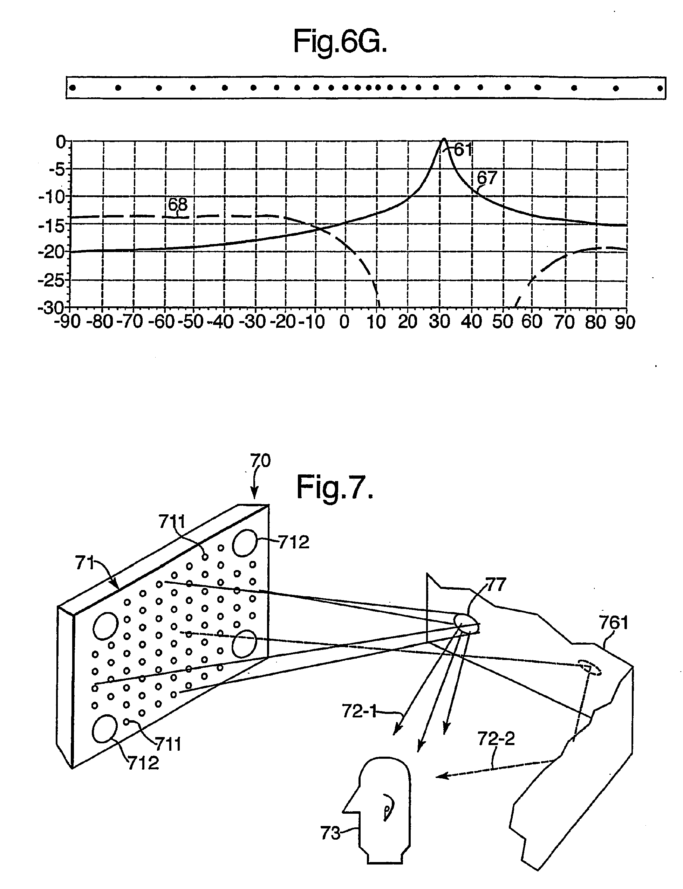

Figure 6G shows the signal 67 (solid line) and noise 68 (dashed line) separately integrated over all frequencies from 20 Hz to 20 kHz. The array is a geometrically spaced non-uniform array with R=0.73. The main beam 61 is steered 30 degrees right. The noise level 68 is everywhere more than 13 dB less than the peak signal level (shown at 0dB in Figure 6G) in the main beam. This transducer arrangement therefore provides good sound localisation across the entire audible spectrum.

Referring now to FIG.7, a Sound Projector 70 is shown when used as a surround sound system. It includes an array of transducers or loudspeakers 71 with a majority of small transducers 711 and four larger low frequency transducers 712. The system is controlled such that audio input signals are emitted as a beam or beams of sound 72-1, 72-2.

The beams of sound 72-1, 72-2 can be directed into - within limits - arbitrary directions within the half-space in front of the array. By making use of carefully chosen reflection paths, a listener 73 will perceive a sound beam emitted by the array as if originating from the location of its last reflection or -more precisely- from an image of the array as reflected by the wall, not unlike a mirror image.

In FIG. 7, two sound beams 72-1 and 72-2 are shown. The first beam 72-1 is directed onto a sidewall 761, which may be part of a room, and reflected in the direction of the listener 73. The listener perceives this beam as originating from an image of the array located at, behind or in front of the reflection spot 77, thus from the right The second beam 72-2, indicated by dashed lines, undergoes two reflections before reaching the listener 73. However, as the last reflection happens in a rear corner, the listener will perceive the sound as if emitted from a source behind them.

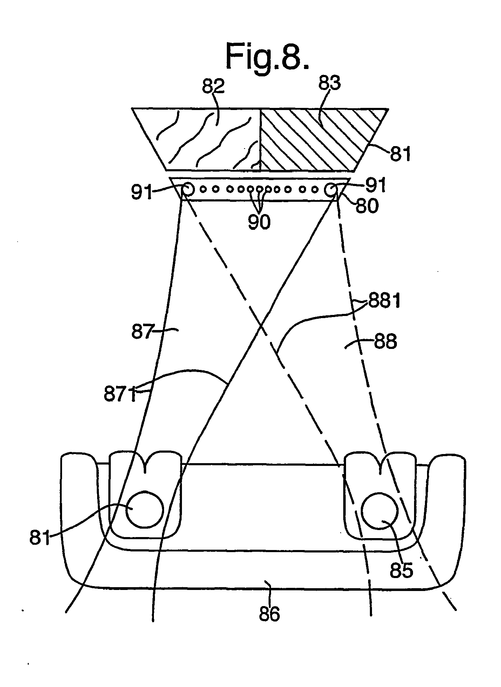

Referring now to Figure 8, a Sound Projector of the invention 80 is shown when used in dual mono mode. The Sound Projector 80 is positioned under a television set 81, for example a flat screen LCD TV, mounted vertically (shown in perspective view in Figure 8 for clarity). The television 81 is operating in multiple window mode (also known as picture on picture mode), showing a first programme, video 1 (V1) on the left half 82 of the screen and a second programme V2 on the right half 83 of the screen. The programmes are being viewed by two people, 84 and 85, shown seated on a sofa 86 positioned in front of the TV 81. The audio track A1 corresponding to programme V1 is reproduced by the Sound Projector, and the resulting sound beam 87 is steered in the direction of the person 84 sitting on the left end of the sofa 86. The solid lines 871 delineate the limits of the beam 87. Similarly, the audio track A2 corresponding to programme V2 is reproduced as a sound beam 88 directed to a second person 85 sitting at the right end of the sofa 86. The dashed lines 881 delineate the limits of the beam 88. Both beams 87,88 are shown focussed at the vicinity of the listener positions, 84,85. At the position of the sofa 86, the two sound beams do not overlap. Thus the left person 84 hears only the left audio track A1 corresponding to the left picture V1, and similarly the right person 85 hears only the right audio track A2 corresponding to the right picture V2.

The Sound Projector 80 shown is an embodiment of the invention comprising a single row of non-uniformly spaced HF transducers 90 and a LF woofer 91 at each end. With this arrangement, no full-power sidelobes are formed, such that neither listener 84,85 is disturbed by high amplitude sound from the other listener's programme. Each listener essentially only hears the audio content from the programme they are watching, carried on the main audio beams 87 and 88 directed to the listeners 84, 85 respectively.

It will be apparent that other arrangements are possible within the scope of the invention. For example, the listeners may be seated separately, one may be closer to the television than the other or they may be at different vertical heights, for example one seated and the other on the floor or standing. In the foregoing, each listener receives only one audio beam, or 'mono' sound. It would be equally possible to direct two audio beams to each listener, corresponding to stereo left and stereo right signals for the programme they are watching. In this case, the stereo left beam would be directed just to the left of the listener's position and the stereo right beam would be directed just to their right. Similarly, each listener could receive a rear sound beam corresponding to the programme they are watching. Further, the foregoing describes an arrangement for two listeners; it is however readily possible for the Sound Projector to provide independent audio beams for three or more listeners disposed around a listening area. Finally, in Figure 8 the Sound Projector 80 is shown separate from the television 81. It could instead be incorporated within the television 81, forming a combined audio-visual display unit.

Whilst there are many uses to which a Sound Projector could be put, it is particularly advantageous in replacing conventional surround-sound systems employing several separate loudspeakers placed at different locations around a listener's position. The digital Sound Projector, by generating beams for each channel of the surround-sound audio signal and steering those beams into the appropriate directions, creates a true surround-sound at the listener position without further loudspeakers or additional wiring.

The claims of the parent application are reproduced below. These clauses define preferable combinations of features. The applicant reserves the right to pursue protection for these combinations of features, and/or any other subject-matter contained in the parent application as filed, either in the present divisional application or in a further application divided from the present divisional application. The claims of the parent application are not the claims of the current application which are contained in a separate section headed "claims".

1. A loudspeaker system including an array comprising first electro-acoustic transducers capable of simultaneously generating at least two beams of sound with at least one of said beams being steerable, and low-frequency transducers adapted to reproduce low frequency sound located in the vicinity of the perimeter of said array.

2. The system of claim 1 further comprising a filter system to filter low frequency content from signals to be emitted by the first transducers and to add said low frequency content to signals to be emitted by the low frequency transducers.

3. The system of claim 1 or 2, wherein the low frequency transducers are wideband transducers adapted to emit signals over a frequency range that substantially includes the frequency range of the first transducers and are part of the beamsteering array.

4. The system of claim 1, 2 or 3, wherein the system is arranged such that the low-frequency transducers located near the left and right side of the array either alone or with closely neighboring first transducers output a left and right channel respectively.

5. The system of any one of the preceding claims, wherein the low frequency transducers are wideband transducers adapted to emit signals over a frequency range that substantially includes the frequency range of the first transducers and wherein the system is arranged such that low-frequency transducers located near the left and right side of the array alone output a left and right channel respectively.

6. The system of any one of the preceding claims, wherein the at least two beams are channels of a surround sound signal.

7. The system of any one of the preceding claims, wherein the at least two beams are two or more different audio signals, such that listeners at different locations relative to the array each respectively receive predominantly only one of said different audio signals.

8. The system of any one of the preceding claims, wherein the spacing between adjacent first transducers is non-uniform.

9. The system of claim 8, wherein the average spacing between first transducers increases towards the perimeter of the array.

10. The system of any one of the preceding claims, wherein the output signal amplitude for each transducer is modified in accordance with a window function.

11. The system of claim 10, wherein the window function gradually tapers towards the perimeter of the array.

12. The system of any one of preceding claims, wherein the number of low-frequency transducers is in the range of between one and twenty.

13. The system of claim 12 wherein the number of low- frequency transducers is in the range of between one and ten.

14. The system of claim 13, wherein the number of low frequency transducers is in the range of from one to four.

15. The system of claim 14, wherein the number of low frequency transducers is in the range of from one to two.

16. The system of any one of the preceding claims, wherein the mid-point spacing of closest neighbouring first transducers is equal to or smaller than half the wavelength corresponding to the lowest acoustic resonance frequency of the first transducers.

17. The system of claim 16, wherein the array of first transducers is densely packed in the area between the low frequency transducers.

18. The system of any one of the preceding claims, further including a phase shifting or compensation circuit to compensate for phase shifts occurring in the transducers.

19. The system of any one of the preceding claims, wherein the array includes one, two or three horizontally oriented lines of first transducers.

20. The system of claim 19, wherein the low frequency transducers are located at or near the end of said horizontally oriented lines.

21. The system of any one of the preceding claims, wherein the array includes a central zone in which the first transducers are arranged in a vertically staggered manner.

22. The system of any one of the preceding claims, wherein the array has a generally elliptical shape.

23. The system of claim 22 wherein the low frequency transducers are positioned in or close to the corner of a rectangle circumscribing the elliptically shaped array.

24. The system of any one of the preceding claims, wherein the number of first transducers is less than 200.

25. The system of claim 24 wherein the number of first transducers is less than 50.

26. The system of any one of the preceding claims, wherein the number of first transducers is more than 5.

27. The system of any one of the preceding claims, wherein the number of first transducers is more than two times the number of low frequency transducers.

28. The system of any one of the preceding claims, wherein the number of first transducers is more than four times the number of low frequency transducers.

29. The system of any one of the preceding claims, wherein the number of first transducers is more than ten times the number of low frequency transducers .

30. The system of any one of the preceding claims, wherein said at least one beam is steerable by delaying replica signals of sound and outputting delayed replicas using at least said first transducers of said array.

31. A media system including a system to display video information and an audio system in accordance with any one of the preceding claims.

32. A media system in accordance with claim 31 wherein the system to display video information is a television system.

33. A media system in accordance with claim 31 comprising a media player to provide video and audio signal input, a monitor to display said video information and a loudspeaker system in accordance with claim 1 to reproduce at least two independently steerable beams of sound.

34. A loudspeaker system including an array of electro-acoustic transducers capable of simultaneously generating at least two beams of sound with at least one of said beams being steerable, a first set of said transducers being high frequency transducers substantially incapable of emitting low frequency sound, a second set of said transducers being low frequency or wideband transducers capable of emitting low frequency sound, said system including a filter system to filter low frequency content from signals destined to be emitted by the high frequency transducers and to add said low frequency content to signals destined to be emitted by the low frequency transducers.

35. A system according to claim 34, wherein said array is a line array.

36. A system according to claim 35, wherein said second set of transducers are located at the ends of the line array.

37. A loudspeaker system comprising a plurality of transducers arranged in a line array formation, wherein the average spacing between the transducers increases towards the ends of the array.

38. A system according to claim 37, wherein said transducers are high frequency transducers substantially incapable of emitting low frequency sound.

39. A system according to claim 37 or 38, further comprising low frequency or wideband transducers at the ends of the array.

40. A system according to any one of claims 34 to 39, wherein the array consists of one, two or three horizontally oriented lines of transducers.

41. A system according to any one of the preceding claims, wherein the width of the array is at least twice the height of the array.

42. A system according to any one of the preceding claims, wherein the width of the array is at least four times the height of the array.

43. A system according to any one of the preceding claims, wherein the width of the array is at least eight times the height of the array.

44. A method of generating beams of sound using an array of electro-acoustic transducers, said method comprising:

filtering signals destined for high frequency transducers to remove low frequency content; and
adding said low frequency content to signals destined for low frequency transducers.

45. A method of generating two beams of sound for two respective listeners using an array, said method comprising:

beaming a first audio programme to a first listening position;
beaming a second audio programme to a second, different, listening position.

46. A method according to claim 45, wherein said array is a horizontally aligned line array.

47. A method according to claim 46, wherein said line array comprises transducers having an average spacing which increases towards the two ends of the array.

48. A method according to claim 47, further comprising:

beaming further audio programmes to further respective listening positions.

49. A system or method according to any one of the preceding claims, wherein said first or high frequency transducers have a diameter less than 50mm.

50. A system or method according to any one of the preceding claims, wherein said low frequency transducers have a diameter greater than 50mm.

51. A system or method according to any one of the preceding claims, wherein said low frequency transducers have a diameter greater than 100mm.

52. A system or method according to any one of the preceding claims, wherein said low frequency transducers have a diameter at least twice as large as the diameter of said first or high frequency transducers.

53. A system or method according to any one of the preceding claims, wherein one or more of said first or high frequency transducers located at or close to the centre of the array are replaced by wideband transducers capable of substantially reproducing low frequencies.

**Claims**

1.  A method of generating two beams of sound for two respective listeners using an array, said method comprising:

    beaming a first audio programme to a first listening position;
    beaming a second audio programme to a second, different, listening position.

2.  A method according to claim 1, wherein said array comprises an array of electro-acoustic transducers that emit audible sound.

3.  A method according to claim 1 or 2, further comprising displaying a first video programme corresponding to said first audio programme and displaying a second video programme corresponding to said second audio programme.

4.  A method according to claim 3, wherein said first and second video programmes are displayed on a split-screen.

5.  A method according to any one of the preceding claims, wherein said first audio programme comprises two audio beams and said second audio programme also comprises two audio beams, the two audio beams of each programme corresponding to stereo left and stereo right signals for the programme beamed to each listening position.

6.  A method according to any one of the preceding claims, wherein said array is a horizontally aligned line array.

7.  A method according to any one of the preceding claims, wherein said line array comprises transducers having an average spacing which increases towards the two ends of the array.

8.  A method according to any one of the preceding claims, further comprising:

    beaming further audio programmes to further respective listening positions.

9.  A loudspeaker system including an array comprising first electro-acoustic transducers capable of simultaneously generating at least two beams of sound with at least one of said beams being steerable, wherein the at least two beams are two or more different audio signals, such that listeners at different locations relative to the array each respectively receive predominantly only one of said different audio signals.

10. A system according to claim 9, wherein said array is a horizontally aligned line array.

11. A system according to claim 10, further comprising a second, low frequency, transducer located at the end of the line array.

12. The system of claim 9, 10 or 11, wherein the average spacing between adjacent first transducers is non-uniform.

13. The system of claim 12, wherein the average spacing between first transducers increases towards the perimeter of the array.

14. The system of any one of claims 9 to 13, wherein the mid-point spacing of closest neighbouring first transducers is equal to or smaller than half the wavelength corresponding to the lowest acoustic resonance frequency of the first transducers.

15. The system of any one of claims 9 to 14, wherein said at least one beam is steerable by delaying replica signals of sound and outputting delayed replicas using at least said first transducers of said array.

16. A media system including a system to display video information and a loudspeaker system in accordance with any one of claims 9 to 15.

17. A media system according to claim 16, wherein the system to display video information is a television system.

# Fig.1.
(Prior art)

100
111

111     110

# Fig.2A.

212     211     201     212

212     210     211     212

# Fig.2B.

# Fig.2C.

# Fig.2D.

# Fig.2E.

# Fig.2F.

# Fig.2G.

# Fig.2H.

# Fig.2I.

# Fig.2J.

# Fig.3A.

Digital
input

CD    DVD1    DVDB    AUX
                      (analogue)    Remote

                                    Display

                                    Lights

301

S/PDIF    | 5.1 Decoder |    System controller
                              system initializing
                              user interface

48 Khz                        302                    303
20/24bit
6channel

S/PDIF

| Sample rate conv | Sample rate conv | Sample rate conv | Sample rate conv |

48.8 Khz
24bit
6channel         305                    305
I2S

Video
in

314

User
inter-
face
overlay

50 Mhz
clock        304

306

Video
out

| DSP | Compensation and interpolation filtering (FIR), 2x oversampling matching filter/crossover for low frequency transducers |

96Khz
24bit

307

| DSP | Vol control, anti-alias, tone control, limiter, up-sampling |

390Khz
24bit
8 channel
I2S                                                        308

| Buffer memory | FPGA   Time delay and summation, quantising, noise shaping, serialising | Buffer memory |

309

390Khz
8bit x 129
for 129          13 (=4) serial streams    309
transducers      at 31.25 Mb/s each
                 plus volume data          System
                                           clock

27

(from Fig.3A.)

Serial data stream
including volume data
(31.25 Mb/s)

## Fig.3B.

System
clock

310 — Pulse width
modulation
for 10 ·
transducers

Volume control

50 Mhz
PWM
bit
rate

311

Transducer
Power supply
(switching)

One PSU per 10
transducers

312 — Transducers
driver

313

# Fig.4.

Surround,
L, R, C

LFE

n

410

411

411

412

413

Surround

n

4

Surround

WL WR

Fig.5A.

Fig.5B.

Fig.5C.

Fig.5D.

Fig.5E.

## Fig.6A.

## Fig.6B.

# Fig.6C.

# Fig.6D

## Fig.6E.

## Fig.6F.

# Fig.6G.

# Fig.7.

# Fig.8.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0123104 A
- WO 02078388 A
- WO 03034780 A
- WO O123104 A